# EUROPEAN PATENT APPLICATION

(11) **EP 1 593 327 A1**
(43) Date of publication of application: **09.11.2005**
(21) Application number: 04025402.1
(22) Date of filing: 26.10.2004
(51) Int. Cl.: A47J 29/02

(54) **Egg boiling device**

(30) Priority: 02.05.2004 IL 16172004
(71) Applicant: Plotnikov, Anatoli, Kiriat Gat (IL)
(72) Inventor: Plotnikov, Anatoli, Kiriat Gat (IL)
(74) Representative: Modiano, Micaela Nadia

(57) **Abstract**

Apparatus (21) for boiling an egg (24), including an egg-boiling container (2) which is adapted to contain the egg and a first volume of water (32), and a heater (11) which is adapted to boil the water in the container. The apparatus also includes one or more valves (16, 17), which are coupled to drain the first volume of water from the egg-boiling container and to introduce a second volume of cold water (34) into the egg-boiling container in place of the first volume. The apparatus further includes an automated controller (3), which is coupled to actuate the heater so as to cook the egg in the first volume of the water for a preset time period, and to actuate the one or more valves at the conclusion of the preset time period so as to replace the boiled water with the cold water.

## Description

### FIELD OF THE INVENTION

The present invention relates generally to boiling of eggs, and particularly to boiling the eggs for a known time.

### BACKGROUND OF THE INVENTION

Boiling eggs for a specific time period, particularly when the eggs are to be soft- or medium-boiled, typically requires relatively accurate measurement of the time period. Methods are known in the art to automate the time period and the boiling process.

PCT application WO9118544A1 to Takahashi, whose disclosure is incorporated herein by reference, describes an egg boiling device which boils water, with an egg in the water, for a preset time period. At the end of the period, cold water is introduced into the boiled water to lower the temperature of the egg.

### SUMMARY OF THE INVENTION

In embodiments of the present invention, one or more eggs are placed in an egg-boiling container, which is filled with a first volume of cold water. A heater boils the first volume of water for a preset time period, set by an automatic controller, producing boiled water and correctly cooked eggs in the egg-boiling container. After the preset time period, the controller opens a first valve to allow the boiled water to at least partially drain. The controller then opens a second valve, which was closed during the preset time period, to allow a second volume of cold water to flow into the egg-boiling container. The correctly cooked eggs are thus cooled with cold water, which at least partially replaces the boiled water and so prevents any further cooking of the eggs.

In a disclosed embodiment, the second valve connects the egg-boiling container to a cold-water-holding reservoir. The second valve is initially open so that filling the egg-boiling container with cold water automatically fills the reservoir with the second volume of cold water. The second valve is typically closed while the eggs are boiled. Typically, a receiving container receives the drained boiled water, and a tube connects the receiving container to the cold-water-holding reservoir. The drained boiled water forces trapped air, via the tube, into the reservoir. The trapped air displaces the second volume in the reservoir, raising the level of the second volume. When the boiled water has completely drained, the second valve opens, and the raised level of the second volume of cold water facilitates gravity flow of the second volume into the egg-boiling container.

There is therefore provided, according to an embodiment of the present invention, apparatus for boiling an egg, including:
an egg-boiling container which is adapted to contain the egg and a first volume of water;
a heater which is adapted to boil the water in the container;
one or more valves, which are coupled to drain the first volume of water from the egg-boiling container and to introduce a second volume of cold water into the egg-boiling container in place of the first volume; and
an automated controller, which is coupled to actuate the heater so as to cook the egg in the first volume of the water for a preset time period, and to actuate the one or more valves at the conclusion of the preset time period so as to at least partially replace the boiled water with the cold water.

The apparatus typically includes a reservoir, coupled to at least one of the one or more valves, for holding the second volume of cold water while the heater boils the first volume of the water.

In an embodiment, the apparatus includes a receiving container, coupled to at least one of the one or more valves, for receiving the drained boiled water. Additionally, the apparatus may include a reservoir, coupled to at least one of the one or more valves, for holding the second volume of cold water while the heater boils the first volume of the water; and a tube, connecting the reservoir to the receiving container, which conveys trapped air from the receiving container to the reservoir. The trapped air may be formed by the drained boiled water in a first enclosure of the receiving container, and the trapped air typically displaces the second volume of cold water from a second enclosure of the reservoir, and may raise a level of the second volume of cold water.

In the embodiment, the receiving container may include a spout which is adapted to pour the drained boiled water therefrom.

The apparatus may also include a handle which enables a user of the apparatus to pour the drained boiled water from the spout.

In one embodiment, the first volume of water includes a first volume of cold water, and the one or more valves are configured so that pouring water into at least one of the egg-boiling container and the reservoir places the first volume of cold water in the egg-boiling container and the second volume of cold water in the reservoir.

In a disclosed embodiment, the automated controller is coupled to substantially completely replace the boiled water with the cold water.

There is further provided, according to an embodiment of the present invention, a method for boiling an egg, including:
placing the egg and a first volume of water in an egg-boiling container; and
actuating an automatic controller so as to boil the water in the container for a preset time period, and to automatically operate one or more valves after the preset time period to drain the boiled water from the egg-boiling container and to introduce a second volume of cold water into the egg-boiling container in place of the boiled water.

The present invention will be more fully understood from the following detailed description of the preferred embodiments thereof, taken together with the drawings, a brief description of which follows.

### BRIEF DESCRIPTION OF THE DRAWINGS

Fig. 1 is a schematic partly sectional diagram of an egg boiling device, according to an embodiment of the present invention;
Fig. 2 illustrates an initial state of the egg boiling device of Fig. 1, according to an embodiment of the present invention;
Fig. 3 illustrates an intermediate state of the egg boiling device of Fig. 1, according to an embodiment of the present invention; and
Fig. 4 illustrates a final state of the egg boiling device of Fig. 1, according to an embodiment of the present invention.

### DETAILED DESCRIPTION OF EMBODIMENTS

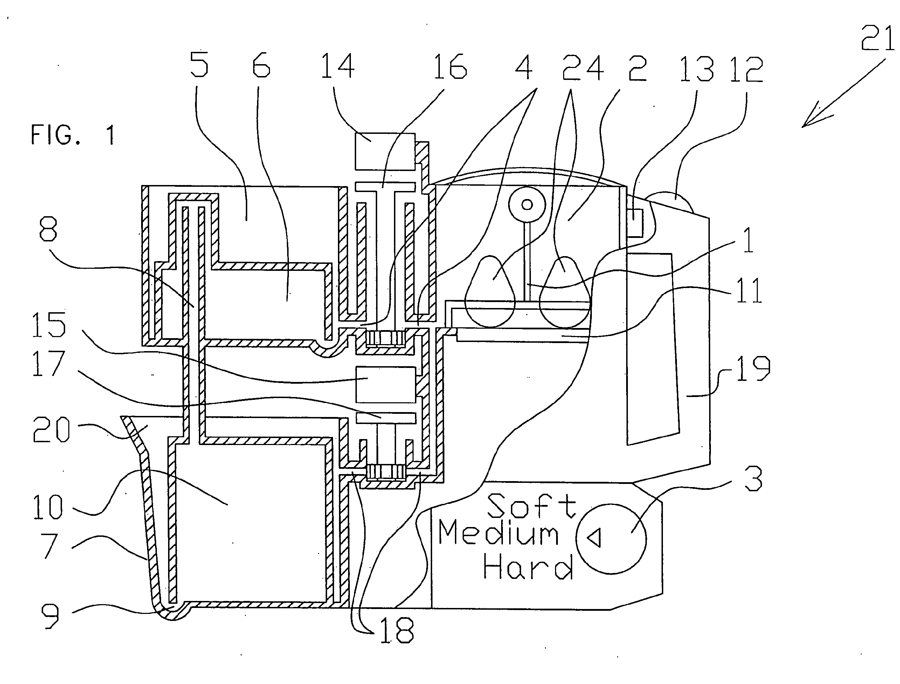

Reference is now made to Fig. 1, which is a schematic partly sectional diagram of an egg boiling device 21, according to an embodiment of the present invention. Device 21 comprises an egg-boiling container 2 into which one or more eggs 24 are placed, typically on a suitable support 1. By way of example, hereinbelow it is assumed that more than one egg is placed into container 2. A connecting tube 4, comprising a first valve 16, enables water to be fed to container 2, as is described in more detail below. Tube 4 couples a cold-water-holding reservoir 5 to container 2. In Fig. 1 valve 16 is shown open, so that there is a path between container 2 and reservoir 5. Valve 16 is typically an electromagnetic valve, activated by an electromagnet 14, although it will be appreciated that all or some of the valves described herein may be activated by any other suitable valve-operating methods known in the art, such as hydraulically-operated or motorized valves. A heater 11 is set into the base of container 2, and is able to boil water when the water is introduced into the container. A thermostat 13 is coupled to heater 11; the function of thermostat 13 is described in more detail below.

A receiving container 7 is coupled by a tube 18, comprising a second valve 17, to egg-boiling container 2. In Fig. 1 valve 17 is shown closed, so that there is no path between container 2 and container 7. Valve 17 is typically an electromagnetic valve, activated by an electromagnet 15. A generally vertical tube 8 couples an enclosure 10 of container 7 to an enclosure 6 in reservoir 5. Typically, container 7 comprises a spout 20 and an opening 9, which enable easy pouring of water from container 7. Furthermore, device 21 typically comprises a handle 19, so that the device may be easily lifted and water poured from container 7.

A timer 3 acts as an automated controller of device 21 and enables an operator of the device to preset a time period during which water is to be boiled in container 2. Typically, the time period is set by having timer 3 point to a level of hardness, such as soft, medium, or hard, desired for the eggs. Alternatively or additionally, timer 3 may point to a period of time during which device 21 boils the water in container 2. Timer 3 may be implemented by any suitable method known in the art, such as electrical, electronic, mechanical and/or hydraulic timing systems, or combinations thereof. Optionally, device 21 comprises an on/off switch 12 for powering the device on or off.

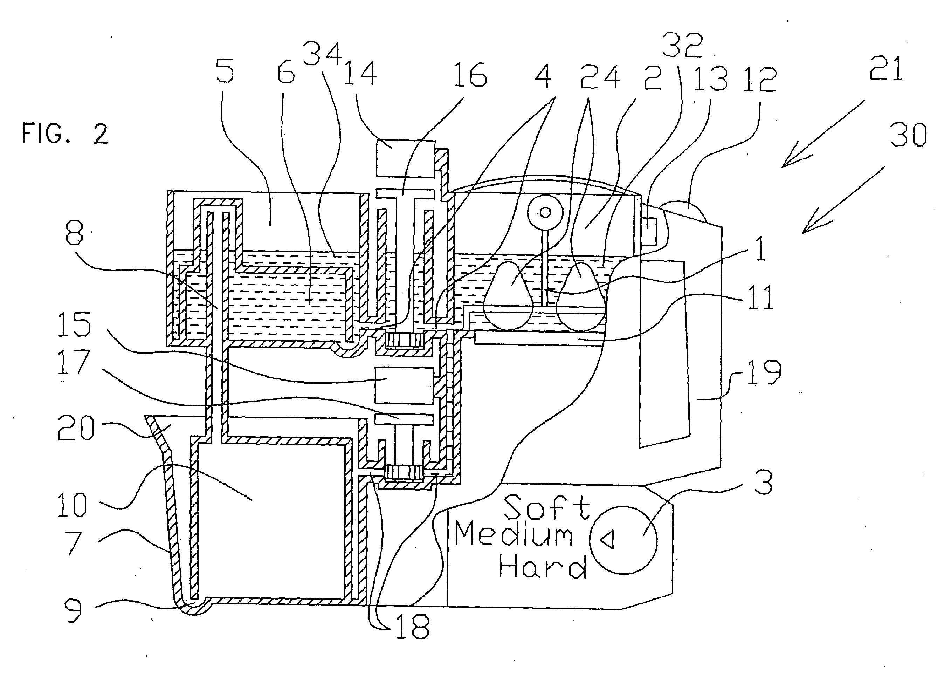

Figs. 2, 3, and 4 are schematic partly sectional diagrams of device 21 in progressive states of use to boil eggs, according to embodiments of the present invention. Fig. 2 illustrates an initial state 30, when device 21 is not powered, i.e., if switch 12 is implemented, the switch is in an off position. In state 30, valve 16 is open. Also in the initial state, timer 3 is set to choose the preset time period for which the eggs are to be boiled. Cold water is poured into container 2 or reservoir 5, forming a first volume 32 of cold water in container 2, and a second volume 34 of cold water in reservoir 5. Volume 34 of cold water typically completely fills enclosure 6. Once the cold water has been introduced into the container 2 and reservoir 5, device 21 is powered on.

Typically, powering device 21 on activates heater 11. Optionally, powering device 21 on may comprise closing valve 16. The activated heater heats volume 32 of water, until the water reaches boiling point, at which point thermostat 13 activates timer 3. Timer 3, thermostat 13, or a combination of the two devices, are implemented to control heater 11 so as to maintain the water boiling in container 2 for the time period set for timer 3. For example, timer 3 and thermostat 13 may be configured to switch heater 11 on for 10 seconds and off for 60 seconds, so as to keep the water boiling in container 2 without generating undue amounts of steam. Any other suitable method known in the art, for maintaining the water in container 2 boiling for the time set by timer 3, may be used. In one embodiment of the present invention, timer 3 is configured both as the automated controller and as an on/off switch for device 21.

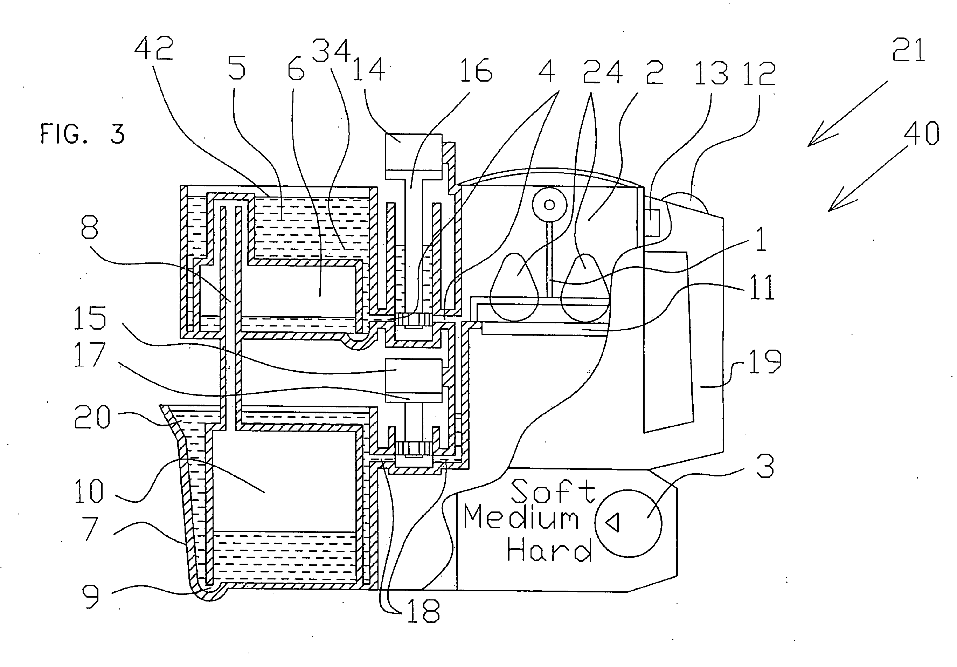

Fig. 3 illustrates an intermediate state 40, which occurs after the time period preset by timer 3 has elapsed. When the time period elapses, valve 16 closes, if it has not been closed as described above, and valve 17 opens. Opening valve 17 causes the boiled water in container 2 to drain from the container, by force of gravity, into receiving container 7. The draining water traps air in enclosure 10, and the trapped air is transferred, under pressure, via tube 8 to enclosure 6 of reservoir 5. The trapped air displaces the cold water in reservoir 5 from enclosure 6, so that the level of water volume 34 rises to a level 42. Typically, timer 3 is configured to actuate valve 17 so as to substantially completely drain the boiled water from container 2. In an alternative embodiment, timer 3 is configured so as to partially drain the boiled water and to leave a small portion of the boiled water in container 2.

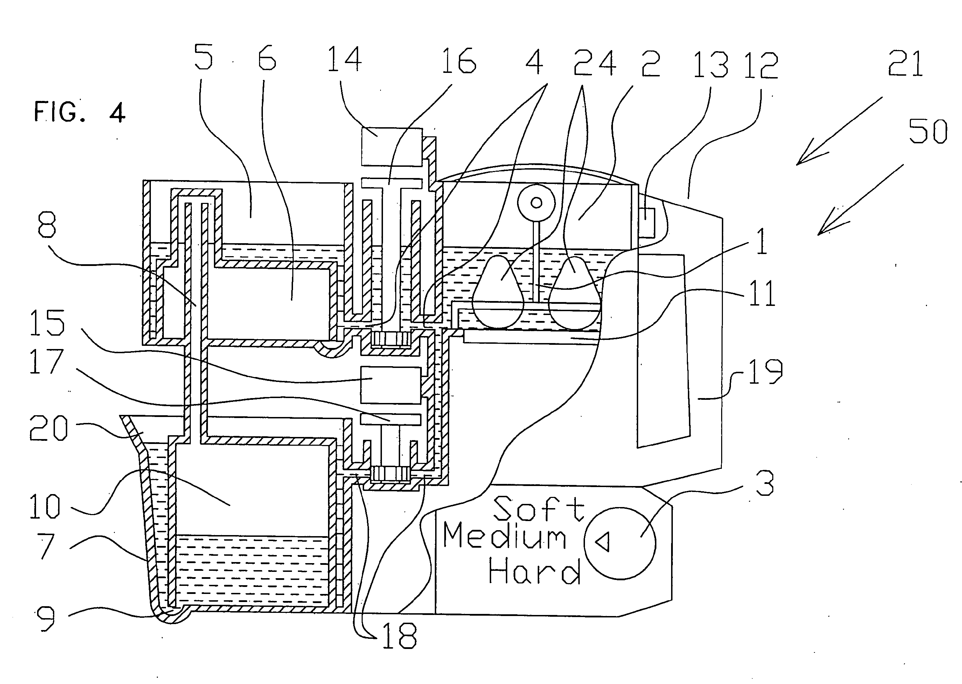

Fig. 4 illustrates a final state 50, which occurs at the conclusion of the preset time period, once the boiled water (volume 32) has at least partially drained from container 2 and when the level of second volume 34 of cold water has risen to level 42. For state 50 to occur, valve 17 closes and valve 16 opens. Cold water volume 34 then flows through tube 4, by force of gravity, into container 2. It will be appreciated that the flow of volume 34 into container 2 is assisted by the raised level 42 of volume 34. It will also be appreciated that the trapped air in enclosure 6 increases the volume of water transferring from reservoir 5 to container 2, by displacement.

The cold water entering container 2 replaces the drained boiled water, and the cold water effectively stops any further cooking of the eggs in container 2. The eggs may then be lifted out of container 2 at any time convenient to a user of device 21. Typically, once the cold water has entered container 2, timer 3 activates a signal device, such as a buzzer, to alert the user that the eggs are ready.

The drained boiled water in container 7, and the cold water in container 2, may be removed from the containers by any convenient method. Typically, the drained boiled water is poured from container 7 via spout 20 using handle 19. Once the drained boiled water has been removed from container 7, it will be understood that device 21 is substantially available to cook further eggs. Typically, the cold water in container 2 is also removed. Optionally, the cold water is allowed to drain into container 7, by opening valve 17, in which case it may be removed from container 7, together with or separately from the drained boiled water, typically by pouring from spout 20.

It will be understood that removing the boiled water from the cooked eggs, and then introducing cold water to contact the eggs, greatly facilitates accurate cooking of the eggs. It will be further understood that the scope of the present invention includes other egg boiling systems, or parts thereof, wherein the boiled water is automatically removed and replaced by cold water. For example, valves 16 and 17 may be combined into a single combination valve configured to perform substantially the same functions as are described above for valves 16 and 17. Such a combination valve typically requires only one electromagnet. Furthermore, a device generally similar to device 21 may comprise "plumbing-in" a cold water supply before valve 16, and/or a drain pipe after valve 17, respectively in place of reservoir 5 and container 7. All such systems or parts thereof are assumed to be comprised within the scope of the present invention.

It will thus be appreciated that the embodiments described above are cited by way of example, and that the present invention is not limited to what has been particularly shown and described hereinabove. Rather, the scope of the present invention includes both combinations and subcombinations of the various features described hereinabove, as well as variations and modifications thereof which would occur to persons skilled in the art upon reading the foregoing description and which are not disclosed in the prior art.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Apparatus for boiling an egg, comprising:
an egg-boiling container which is adapted to contain the egg and a first volume of water;
a heater which is adapted to boil the water in the coritainer;
one or more valves, which are coupled to drain the first volume of water from the egg-boiling container and to introduce a second volume of cold water into the egg-boiling container in place of the first volume; and
an automated controller, which is coupled to actuate the heater so as to cook the egg in the first volume of the water for a preset time period, and to actuate the one or more valves at the conclusion of the preset time period so as to at least partly replace the boiled water with the cold water.

2. The apparatus according to claim 1, and comprising a reservoir, coupled to at least one of the one or more valves, for holding the second volume of cold water while the heater boils the first volume of the water.

3. The apparatus according to claim 1, and comprising a receiving container, coupled to at least one of the one or more valves, for receiving the drained boiled water.

4. The apparatus according to claim 3, and comprising:
a reservoir, coupled to at least one of the one or more valves, for holding the second volume of cold water while the heater boils the first volume of the water; and
a tube, connecting the reservoir to the receiving container, which conveys trapped air from the receiving container to the reservoir.

5. The apparatus according to claim 4, wherein the trapped air is formed by the drained boiled water in a first enclosure of the receiving container, and wherein the trapped air displaces the second volume of cold water from a second enclosure of the reservoir.

6. The apparatus according to claim 4 or claim 5, wherein the trapped air raises a level of the second volume of cold water.

7. The apparatus according to claim 3, wherein the receiving container comprises a spout which is adapted to pour the drained boiled water therefrom.

8. The apparatus according to claim 7, and comprising a handle which enables a user of the apparatus to pour the drained boiled water from the spout.

9. The apparatus according to claim 2, wherein the first volume of water comprises a first volume of cold water, and wherein the one or more valves are configured so that pouring water into at least one of the egg-boiling container and the reservoir places the first volume of cold water in the egg-boiling container and the second volume of cold water in the reservoir.

10. The apparatus according to claim 1, wherein the automated controller is coupled to substantially completely replace the boiled water with the cold water.

11. A method for boiling an egg, comprising:
placing the egg and a first volume of water in an egg-boiling container; and
actuating an automatic controller so as to boil the water in the container for a preset time period, and to automatically operate one or more valves after the preset time period to drain the boiled water from the egg-boiling container and to introduce a second volume of cold water into the egg-boiling container in place of the boiled water.

12. The method according to claim 11, and comprising coupling a reservoir to at least one of the one or more valves, the reservoir holding the second volume of cold water while the heater boils the first volume of the water.
